# EUROPÄISCHE PATENTANMELDUNG

(11) **EP 2 083 523 A2**
(43) Veröffentlichungstag der Anmeldung: **29.07.2009**
(21) Anmeldenummer: 09000643.8
(22) Anmeldetag: 19.01.2009
(51) Int. Cl.: H04B 15/04, H04B 1/30

(54) **Empfänger, Verfahren zum Empfang und Verwendung eines In-Phase-Signals und eines Quadraturphase-Signals**

(30) Priorität: 24.01.2008 DE 102008005981
(71) Anmelder: ATMEL Germany GmbH, 74072 Heilbronn (DE)
(72) Erfinder: Schwarzmüller, Marco, Dipl.-Ing. (FH), 74080 Heilbronn (DE)
(74) Vertreter: Müller, Wolf-Christian

(57) **Zusammenfassung**

Empfänger, Verfahren zum Empfang und Verwendung eines In-Phase-Signals und eines Quadraturphase-Signals
- mit einem Mischer im Empfangspfad,
- mit einem Oszillator, dessen Ausgang mit einem Mischereingang des Mischers verbunden ist, wobei der Oszillator ausgebildet ist, ein mit einer Basisfrequenz oszillierendes Basissignal am Ausgang auszugeben,
- mit einer Takterzeugungsvorrichtung zur Erzeugung eines Taktsignals aus dem Basissignal, deren Eingang mit dem Ausgang des Oszillators verbunden ist, wobei die Takterzeugungsvorrichtung einen Frequenzumsetzer zum Umsetzen einer Basisfrequenz des Basissignals um den Faktor F = x + A, wobei x eine positive ganze Zahl und A eine rationale Zahl zwischen 0 und 1 ist, und
- mit einer Signalverarbeitungseinrichtung, die dem Mischer im Empfangspfad nachgeschaltet ist, wobei die Signalverarbeitungseinrichtung mit der Takterzeugungsvorrichtung zur Ansteuerung mit dem Taktsignal verbunden ist.

## Beschreibung

Die vorliegende Erfindung betrifft einen Empfänger, ein Verfahren zum Empfang und eine Verwendung eines In-Phase-Signals und eines Quadraturphasesignals.

Um die Störfestigkeit eines Empfängers zu verbessern, können analoge Empfangsschaltkreise und digitale Signalverarbeitungsprozessoren durch Entkopplungs-, Abschirmungs- und Isolationsmaßnahmen auf einem Halbleiterchip getrennt werden. Weiterhin ist es möglich die Störfestigkeit eines Empfängers durch die Verwendung von differenziellen Eingängen zu erhöhen. Werden ein analoger Empfangsschaltkreis und die digitale Signalverarbeitung auf zwei getrennten Halbleiterchips ausgebildet, kann die Störfestigkeit des analogen Empfangsschaltkreises wiederum deutlich erhöht werden.

Der Erfindung liegt die Aufgabe zu Grunde die Störfestigkeit eines Empfängers möglichst zu verbessern.

Diese Aufgabe wird durch einen Empfänger mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist Empfänger vorgesehen. Dieser Empfänger ist vorzugsweise monolithisch in einem Halbleiterchip integriert. Der Empfänger empfängt beispielweise über eine Antenne ein Empfangssignal. Der Empfänger weist vorzugsweise einen Mischer im Empfangspfad auf. Unter einem Empfangspfad werden vorzugsweise Verbindungen und Teilschaltkreise zur Verarbeitung des Empfangenen Signals verstanden. Derartige Teilschaltkreise sind beispielsweise Mischer, Verstärker, Abtastschaltkreis, Analog-Digital-Umsetzer, Demodulator, etc. Der Mischer dient vorzugsweise einem Heruntermischen des Empfangssignals auf ein Zwischensignal mit einer Zwischenfrequenz. Die Zwischenfrequenz ist vorzugsweise um Größenordnungen kleiner als (Nutz-)Frequenzen des Empfangssignals (engl.: near zero IF, low IF). Auch kann auf eine Zwischenfrequenz von 0Hz (Basisband) heruntergemischt werden. Vorzugsweise ist die Zwischenfrequenz kleiner als 1 MHz, beispielsweise 250 kHz.

Der Empfänger weist einen Oszillator (engl. local oscillator) auf, dessen Ausgang mit einem Mischereingang des Mischers verbunden ist. Der Oszillator ist ausgebildet ein mit einer Basisfrequenz oszillierendes Basissignal am Ausgang auszugeben. Das Basissignal kann ein oder mehrere phasenversetzte Teilsignale aufweisen.

Weiterhin weist der Empfänger eine Takterzeugungsvorrichtung zur Erzeugung eines Taktsignals aus dem Basissignal auf. Der Eingang Takterzeugungsvorrichtung ist mit dem Ausgang des Oszillators verbunden. Eingänge und Ausgänge können dabei eine oder mehrere Einzelverbindungen aufweisen. Die Takterzeugungsvorrichtung weist einen Frequenzumsetzer auf. Der Frequenzumsetzer ist ausgebildet zum Umsetzen einer Basisfrequenz des Basissignals um den Faktor F = x + A.

x ist eine positive ganze Zahl. A ist eine positive rationale Zahl zwischen 0 und 1. Beispielweise ist A ein positiver Bruch ganzer Zahlen kleiner 1, insbesondere ein Kehrwert einer positiven ganzen Zahl. x ist beispielsweise aus {1; 2; 3; 4; 5}. A ist beispielsweise aus {1/2; 1/3; 1/4; 1/5}.

Weiterhin weist der Empfänger vorzugsweise eine Signalverarbeitungseinrichtung auf. Die Signalverarbeitungseinrichtung ist dem Mischer im Empfangspfad nachgeschaltet. Dabei wird das Empfangssignal vorzugsweise zuerst durch den Mischer und vorzugsweise nach einem Heruntermischen das heruntergemischte Signal durch die vorteilhafterweise zumindest teilweise digitale Signalverarbeitungseinrichtung verarbeitet. Die Signalverarbeitungseinrichtung ist mit der Takterzeugungsvorrichtung verbunden. Diese Verbindung ist zur Ansteuerung der Signalverarbeitungseinrichtung mit dem Taktsignal ausgebildet.

Der Erfindung liegt weiterhin die Aufgabe zu Grunde ein möglichst verbessertes Verfahren zum Empfang anzugeben.

Diese Aufgabe wird durch das Verfahren mit den Merkmalen des unabhängigen Anspruchs 8 gelöst. Vorteilhafte Weiterbildungen sind Gegenstand von abhängigen Ansprüchen und in der Beschreibung enthalten.

Demzufolge ist ein Verfahren zum Empfang eines Empfangssignals vorgesehen. Das Empfangssignal weist eine oder mehrere Empfangsfrequenzen oder einen Empfangsfrequenzbereich mit einer Vielzahl von Frequenzen zur Informationsübertragung auf.

Das Empfangssignal wird mittels eines Basissignals eines Oszillators mit einer Basisfrequenz auf ein Zwischensignal mit einer Zwischenfrequenz heruntergemischt. Die Zwischenfrequenz ist dabei vorteilhafterweise signifikant kleiner als Nutz-Frequenzen des Empfangssignals.

Aus dem Basissignal wird ein Taktsignals durch Umsetzen um den Faktor F = x + A erzeugt. x ist eine positive ganze Zahl. A ist eine positive rationale Zahl zwischen 0 und 1. Beispielweise ist A ein positiver Bruch ganzer Zahlen kleiner 1, insbesondere ein Kehrwert einer positiven ganzen Zahl. x ist beispielsweise aus {1; 2; 3; 4; 5}. A ist beispielsweise aus {1/2; 1/3; 1/4; 1/5}.

Das Zwischensignal mit der Zwischenfrequenz wird in Abhängigkeit von dem Taktsignal ausgewertet. Vorzugsweise steuert das Taktsignal eine Recheneinheit, die zu Auswertung des Zwischensignals ausgebildet und eingerichtet ist.

Der Erfindung liegt weiterhin die Aufgabe zu Grunde, eine Verwendung eines In-Phase-Signals und eines Quadraturphase-Signals eines Oszillators eines Empfängers anzugeben.

Diese Aufgabe wird durch eine Verwendung mit den Merkmalen des unabhängigen Anspruchs 10 gelöst. Vorteilhafte Weiterbildungen sind Gegenstand von abhängigen Ansprüchen und in der Beschreibung angegeben.

Demzufolge ist eine Verwendung eines In-Phase-Signals und eines Quadraturphase-Signals eines Oszillators eines Empfängers zur Erzeugung eines Taktsignals für eine insbesondere einem Mischer und/oder einem Verstärker nachgeschaltete Signalverarbeitungseinrichtung vorgesehen. Beginnend mit einer Flanke des In-Phase-Signals oder des Quadratur-Phase-Signals werden abwechselnd die Flanken des In-Phase-Signals und des Quadratur-Phase-Signals gezählt. Ein Zählerstand wird bei jeder gezählten Flanke erhöht oder verringert. Beim Zählerstand M von M = 2m + 1 wird eine steigende oder eine fallende Flanke des Taktsignals erzeugt wird. Dabei ist m eine vorbestimmte positive ganze Zahl. Beispielsweise ist m aus {1; 2; 3; 4; 5}.

Die im Folgenden beschriebenen Weiterbildungen beziehen sich sowohl auf den Empfänger, als auch auf die Verwendung des In-Phase-Signals und des Quadraturphase-Signals als auch auf das Verfahren zum Empfangen.

Bevorzugt ist A = 1/2, so dass die Grundwellen des jeweiligen Signals und deren Harmonische nicht überlappen.

Der Frequenzumsetzer kann einen Frequenzvervielfacher aufweisen, der ausgebildet ist die Basisfrequenz um den Faktor F zu vervielfachen. Der Frequenzumsetzer kann beispielsweise die Basisfrequenz mit dem Faktor F multiplizieren. Bevorzugt ist jedoch vorgesehen, dass der Frequenzumsetzer einen Frequenzteiler aufweist, der ausgebildet ist, die Basisfrequenz durch den Faktor F zu teilen.

Der Frequenzumsetzer kann beispielsweise eine Mehrzahl von Flip-Flops, beispielsweise Double-Edged-Triggered Flip-Flops zur Umsetzung aufweisen.

Aus dem Taktsignal können weitere Taktsignale - beispielsweise durch Teilung - abgeleitet werden. Die Grundfrequenzen der weiteren Taktsignale sind durch die jeweilige Periodendauer bestimmt. Weitere Taktsignale unterscheiden sich untereinander und/oder vom Taktsignal vorzugsweise um einen Faktor G = 2y + 1. Vorzugsweise weist die Takterzeugungsvorrichtung einen weiteren Frequenzumsetzer zum Umsetzen einer Taktfrequenz des Taktsignals um den Faktor G = 2y + 1 in ein weiteres Taktsignal mit einer weiteren Taktfrequenz, wobei y eine positive ganze Zahl ist. y kann sich dabei von x unterscheiden.

Vorzugsweise weist der weitere Frequenzumsetzer einen weiteren Frequenzvervielfacher oder einen weiteren Frequenzteiler auf. Der Frequenzteiler ist ausgebildet die Taktfrequenz durch den Faktor G zu teilen.

Gemäß einer anderen Ausführungsform umfasst die Takterzeugungsvorrichtung eine Mehrzahl von Frequenzumsetzern zum Bereitstellen einer Mehrzahl von Taktsignalen. Die Frequenzumsetzer sind in Serie geschaltet. Jeder Frequenzumsetzer ist ausgebildet die Frequenz eines Ausgangstaktsignals eines ihm vorgeschalteten Frequenzumsetzers um den Faktor H = 2z + 1 umzusetzen, insbesondere zu teilen oder zu multiplizieren. Dabei können z und damit H für jeden Frequenzumsetzer unterschiedlich sein.

Gemäß einer besonders bevorzugten Weiterbildung ist vorgesehen, dass der Oszillator zur Ausgabe eines In-Phase-Signals und eines Quadratur-Phase-Signals als Basissignal mit der Basisfrequenz ausgebildet ist. Das In-Phase-Signal und das Quadratur-Phase-Signal sind vorzugsweise zueinander 90° bezogen auf eine Periode phasenversetzt.

Die Takterzeugungsvorrichtung ist ausgebildet abwechselnd die Flanken des In-Phase-Signals und des Quadraturphase-Signals zu zählen, um einen Zählerstand bei jeder gezählten Flanke zu erhöhen oder zu verringern.

Die Takterzeugungsvorrichtung ist ausgebildet, beim Zählerstand von M = 2m + 1 eine steigende oder fallende Flanke zu erzeugen, wobei m eine vorbestimmte positive ganze Zahl ist. M ist somit ein Zählerstand entsprechend einer ungeraden Zahl, wie beispielsweise aus {3, 5, 7}.

Gemäß einer vorteilhaften Ausgestaltung weist die Takterzeugungsvorrichtung zur Zählung der Flanken einen Flankenzähler auf. Vorzugsweise weist die Takterzeugungsvorrichtung zur Erzeugung einer Flanke einen Signalgenerator auf.

Vorzugsweise ist vorgesehen, dass die Signalverarbeitungseinrichtung einen Analog-Digital-Umsetzer zur Abtastung und Umsetzung des analogen Zwischensignals in ein digitales Signal aufweist. Besonders bevorzugt weist die Signalverarbeitungseinrichtung eine digitale Recheneinheit, insbesondere einen digitalen Signalprozessor auf, der das abgetastete und umgesetzte Zwischensignal zur Extraktion der übertragenen Daten demoduliert.

In einer vorteilhaften Weiterbildung ist vorgesehen, dass zur Auswertung das Zwischensignal mit der Zwischenfrequenz in Abhängigkeit von dem Taktsignal abgetastet und/oder demoduliert wird. Vorzugsweise ist die Abtastrate der Analog-Digital-Umsetzer der Signalverarbeitungseinrichtung von dem Taktsignal abgeleitet oder mit diesem identisch. Weitere Verfahrensmerkmale ergeben sich auch aus der Funktionalität der Takterzeugungsvorrichtung. Gemäß einem Aspekt schafft die Erfindung ein Computerprogramm zum Ausführen des erfindungsgemäßen Verfahrens, wenn das Computerprogramm auf einer Recheneinheit oder einem Computer abläuft.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: einen Empfänger,
- Fig. 2: einen Empfänger,
- Fig. 3: einen Frequenzplan,
- Fig. 4: einen Empfänger,
- Fig. 5: Signalzeit-Diagramme,
- Fig. 6: einen Frequenzumsetzer, und
- Fig. 7a bis 7d: ein Ausführungsbeispiel eines Frequenzumsetzers.

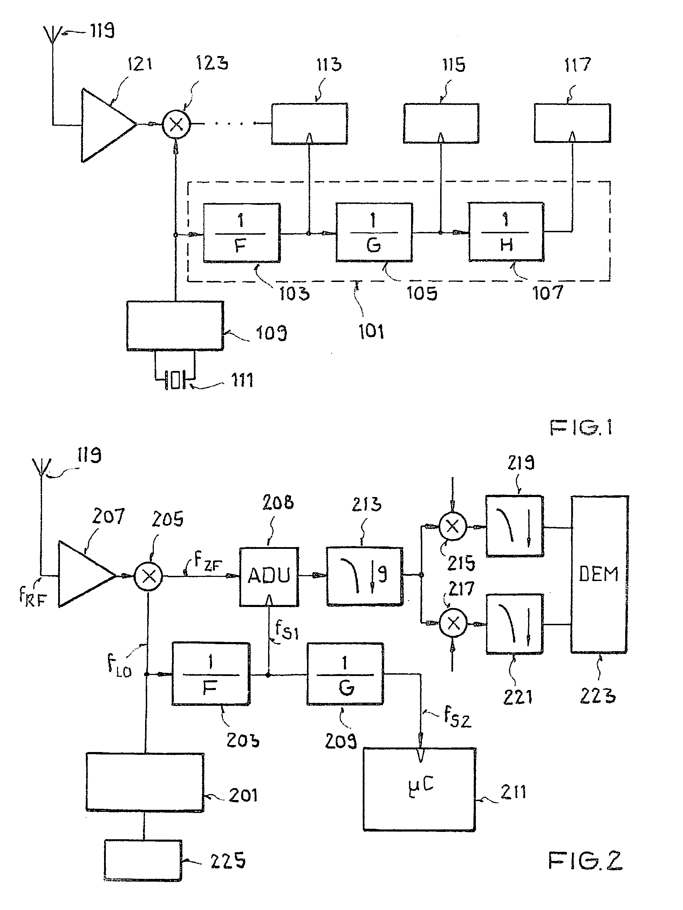

Fig. 1 zeigt einen Empfänger mit einem Mischer 123 im Empfangspfad. Der Empfänger weist weiterhin einen Oszillator 111, 109 auf, dessen Ausgang mit einem Mischereingang des Mischers 123 verbunden ist. Der Oszillator 111, 109 ist ausgebildet ein mit einer Basisfrequenz oszillierendes Basissignal am Ausgang auszugeben. Der Empfänger weist weiterhin eine Takterzeugungsvorrichtung 101 zur Erzeugung eines Taktsignals aus dem Basissignal auf. Der Eingang der Takterzeugungsvorrichtung 101 ist mit dem Ausgang des Oszillators 11, 109 verbunden. Die Takterzeugungsvorrichtung 101 weist einen Frequenzumsetzer 103 zum Umsetzen einer Basisfrequenz des Basissignals um den Faktor F = x + A auf. Im Ausführungsbeispiel der Fig. 1 ist F ein Teilungsfaktor. Dabei ist x eine positive ganze Zahl und A eine rationale Zahl zwischen 0 und 1 ist. Im Ausführungsbeispiel der Fig. 1 beträgt x = 3 und A = 1/2.

Ein integrierter digitaler Schaltkreis (113, 115, 117), wie ein Demodulator, ein Mikroprozessor oder ein Signalprozessor wird durch das benötigte Taktsignal gesteuert. Dabei können ebenfalls Oberwellen auftreten, die das Empfangssignal stören. Wird jedoch gemäß dem Ausführungsbeispiel der Fig. 1 das (digitale) Taktsignal vom Basissignal des Oszillators 109, 111 für den Mischer 123 abgeleitet, indem ein Teiler 103 verwendet wird, der die Basisfrequenz durch den Faktor F teilt, dann liegen alle Takte und deren Oberwellen genau links und rechts des Empfangsbandes und damit im Sperrband des Empfängers. Dies gilt insbesondere für Empfänger, mit einer Zwischenfrequenz nahe Null Hertz oder gleich Null Hertz. Das Sperrband wird beispielsweise durch einen entsprechenden Empfangsfilter bewirkt.

Die Signalverarbeitungseinrichtungen 113, 115 und 117 sind dem Mischer 123 im Empfangspfad nachgeschaltet ist, wobei die Signalverarbeitungseinrichtungen 113, 115 und 117 mit der Takterzeugungsvorrichtung 101 zur Ansteuerung mit dem Taktsignal verbunden ist.

Fig. 1 zeigt einen Empfänger mit einer Takterzeugungsvorrichtung 101, die den ersten Frequenzumsetzer 103, einen zweiten Frequenzumsetzer 105 und einen dritten Frequenzumsetzer 107 aufweist. Weiterhin weist der Empfänger einen Oszillator mit einer PLL (PLL: Phase Locked Loop) 109 und einem Quarz 111 auf. Alternativ kann auch ein spannungsgesteuerter, LC-Schwingkreis verwendet werden.

Ein Ausgang der PLL 109 ist mit einem Eingang des ersten Frequenzumsetzers 103 verbunden. Ein Ausgang des ersten Frequenzumsetzers 103 ist mit einem Eingang des zweiten Frequenzumsetzers 105 verbunden. Ein Ausgang des zweiten Frequenzumsetzers 105 ist mit einem Eingang des dritten Frequenzumsetzers 107 verbunden.

Der in Fig. 1 dargestellte Empfänger weist ferner eine erste Signalverarbeitungseinrichtung 113, eine zweite Signalverarbeitungseinrichtung 115 und eine dritte Signalverarbeitungseinrichtung 117 auf. Ein Takteingang der ersten Signalverarbeitungseinrichtung 113 ist mit dem Ausgang des ersten Frequenzumsetzers 103 verbunden. Ein Takteingang der zweiten Signalverarbeitungseinrichtung 115 ist mit dem Ausgang des zweiten Frequenzumsetzers 105 verbunden. Ein Takteingang der dritten Signalverarbeitungseinrichtung 107 ist mit dem Ausgang des dritten Frequenzumsetzers 107 verbunden.

Der Empfänger der Fig. 1 umfasst ferner eine Antenne 119 zum Empfangen eines Empfangssignals, der ein Verstärker 121, beispielsweise ein LNA-Verstärker (LNA: Low Noise Amplifier) im Empfangspfad nachgeschaltet ist. Anstelle einer Antenne kann beispielsweise auch ein Kabelanschluss vorgesehen sein. Ein Ausgang des Verstärkers 121 ist mit einem ersten Eingang des Mischers 123 verbunden. Der Ausgang der PLL 109 ist mit einem zweiten Eingang des Mischers 123 verbunden. Ein Ausgang des Mischers 123 ist mit einem Eingang einer in Fig. 1 nicht dargestellten Signalverarbeitungsstufe verbunden, die beispielsweise ein Empfangsfilter, ein Analog-Digital-Umsetzer und dergleichen aufweisen kann. Ein Ausgang der nicht eingezeichneten Signalverarbeitungsstufe ist beispielsweise mit einem Eingang der ersten Signalverarbeitungseinrichtung 113 verbunden. Der Ausgang der nicht eingezeichneten Signalverarbeitungsstufe kann ferner mit Eingängen der Signalverarbeitungseinrichtungen 115 und 117 verbunden sein. Ebenfalls ist es möglich auf die nicht eingezeichnete Signalverarbeitungsstufe zu verzichten und den Mischer direkt mit der ersten Signalverarbeitungseinrichtung 113 zu verbinden.

Gemäß einer weiteren Ausführungsform kann die zweite Signalverarbeitungseinrichtung 115 der ersten Signalverarbeitungseinrichtung nachgeschaltet sein, wobei die dritte Signalverarbeitungseinrichtung 117 der zweiten Signalverarbeitungseinrichtung 115 nachgeschaltet sein kann.

Die Signalverarbeitungseinrichtungen 113, 115 und 117 können beispielsweise digitale und/oder analoge Filter, Entzerrer, Demodulatoren, Decodierer oder sonstige digitale und/oder analoge Signalverarbeitungsschaltkreise sein.

Das Empfangssignal wird nach der Verstärkung durch den Verstärker 121 unter Verwendung des Ausgangssignals der PLL 109 beispielsweise auf eine Zwischenfrequenz oder direkt in das Basisband gemischt. Die PLL 109 wird durch den Quarz 111 angesteuert. Gemäß einer weiteren Ausführungsform kann die PLL 109 und der Quarz 111 durch einen Oszillator beispielsweise einen LC-Oszillator ersetzt werden, dessen Basissignal direkt dem Mischer 123 zugeführt wird. Das Ausgangssignal der PLL 109 bzw. eines die PLL 109 ersetzenden Oszillators entspricht dem vorstehend genannten oszillierenden Basissignal, dessen Grundfrequenz der Oszillationsfrequenz des Ausgangssignals des Oszillators bzw. des Ausgangssignals der PLL 109 entspricht.

Der erste Frequenzumsetzer 103 kann beispielsweise ein Frequenzteiler sein, der die Ausgangsfrequenz der PLL 109 um den Faktor x+0,5 teilt. x ist bevorzugt eine natürliche Zahl, beispielsweise ist x=2 oder x=3. Der dem ersten Frequenzumsetzer 103 nachgeschaltete zweite Frequenzumsetzer 105 kann ebenfalls ein Frequenzteiler sein, der die Ausgangsfrequenz des ersten Frequenzumsetzers 103 durch den Faktor G = 2y+1 teilt. Dabei ist y eine positive natürliche Zahl, die sich von x unterscheidet. Der dem zweiten Frequenzumsetzer 105 nachgeschaltete dritte Frequenzumsetzer 107 kann ebenfalls ein Frequenzteiler sein, der die Ausgangsfrequenz des zweiten Frequenzumsetzers 105 durch den Faktor H = 2z+1 teilt, wobei z eine positive natürliche Zahl ist, die sich von x und y unterscheiden kann.

Der erste Frequenzumsetzer 103 erzeugt ein Taktsignal für die Taktung der ersten Signalverarbeitungseinrichtung 113. Durch die erfindungsgemäße Wahl des Teilungsfaktors wird sichergestellt, dass das der ersten Signalverarbeitungseinrichtung 113 zugefügte Taktsignal eine Grundfrequenz sowie deren Oberwellen aufweist, die nicht mit der genutzten Empfangsfrequenz oder dem genutzten Empfangsfrequenzbereich des Empfangssignals zusammenfallen.

Der zweite Frequenzumsetzer 105 stellt durch den Teilungsfaktor G = 2y + 1 sicher, dass das der zweiten Signalverarbeitungseinrichtung 115 zugeführte Taktsignal eine Grundfrequenz sowie deren Oberwellen aufweist, die möglichst nicht mit der genutzten Empfangsfrequenz oder dem genutzten Empfangsfrequenzbereich des Empfangssignals und nicht mit der Frequenz des Eingangssignals der zweiten Signalverarbeitungseinrichtung 115 zusammenfallen.

In Analogie hierzu stellt der dritte Frequenzumsetzer 107 aufgrund des Teilungsfaktors H = 2z + 1 sicher, dass das der dritten Signalverarbeitungseinrichtung 117 zugeführte Taktsignal eine Grundfrequenz sowie deren Harmonische aufweist, die möglichst nicht mit der genutzten Empfangsfrequenz oder dem genutzten Empfangsfrequenzbereich des Empfangssignals und nicht mit der Frequenz des Eingangssignals der dritten Signalverarbeitungseinrichtung 117 zusammenfallen.

Fig. 2 zeigt einen Empfänger mit einer Takterzeugungsvorrichtung 203, 209 und mit einer PLL 201, deren Ausgang mit einem Eingang eines ersten Frequenzumsetzers 203 der Takterzeugungsvorrichtung verbunden ist. Der Ausgang der PLL 201 gibt das Basissignal mit der Frequenz fLO ab und ist ferner mit einem ersten Eingang eines Mischers 205 verbunden. Der Empfänger umfasst ferner eine Antenne 119, die über einen Verstärker 207 mit einem zweiten Eingang des Mischers 205 verbunden ist. Ein Ausgang des Mischers 205 ist mit einem Analog-zu-Digital-Umsetzer (ADU) 208 verbunden, dessen Takteingang mit einem Ausgang des ersten Frequenzumsetzers 203 verbunden ist.

Die Takterzeugungsvorrichtung umfasst ferner einen zweiten Frequenzumsetzer 209, der dem ersten Umsetzer 203 nachgeschaltet ist und einen Ausgang hat, der mit einem Takteingang eines Mikrocontrollers (µC) 211 verbunden ist.

Ein Ausgang des Analog-Digital-Umsetzers (ADU) 208 ist mit einem Eingang eines Tiefpassfilters 213 verbunden, das optional eine Unterabtastung um beispielsweise den Faktor 9 durchführt. Ein Ausgang des Filters 213 ist mit einem ersten Mischer 215 und einem zweiten Mischer 217 verbunden. Die Ausgänge der Mischer 215 und 217 sind jeweils mit einem Filter 219 und 221 verbunden. Die Ausgänge der Filter 219 und 221 sind mit einem Demodulator 223 verbunden. Die Filter 219 und 221 sind beispielsweise Tiefpassfilter, die ferner ausgebildet sein können, eine weitere Abtastratenumsetzung durchzuführen. Die PLL 201 wird von einem Oszillator 225, beispielsweise von einem Quarzoszillator, angesteuert. Gemäß einer weiteren Ausführungsform kann die PLL 201 durch beispielsweise einen spannungsgesteuerten Oszillator, der ein LC-Oszillator sein kann, ausgetauscht werden.

Der erste Frequenzumsetzer 203 ist ausgebildet, eine Frequenzteilung durch den Faktor F = x + 1/2 durchzuführen, um ein Taktsignal mit der Taktfrequenz fs1 für den Analog-Digital-Umsetzer (ADU) 208 bereitzustellen. Die Taktfrequenz entspricht beispielsweise der Abtastfrequenz des Analog-Digital-Umsetzers (ADU) 208. Der zweite Frequenzumsetzer 209 teilt die Frequenz des Ausgangstaktsignals des ersten Frequenzumsetzers 203 durch den Faktor G = 2m + 1, um ein weiteres Taktsignal für den Mikrocontroller 211 bereitzustellen. Dabei sind x und m unterschiedliche natürliche Zahlen.

Ein über die Antenne empfangenes Signal bei der Frequenz fRF wird nach einer Verstärkung auf eine Zwischenfrequenz fZF unter Verwendung des Ausgangssignals der PLL 201 und des Mischers 205 heruntergemischt und bei der Zwischenfrequenz fZF dem Analog-Digital-Umsetzer (ADU) 208 zugeführt, der mit der Frequenz fs1 getaktet wird. Nach einer Tiefpassfilterung und einer optionalen Abtastratenumsetzung durch das Filter 213 wird das Filterausgangssignal dem Quadratur-Mischerpaar 215 und 217 zugeführt, das das Mischerausgangssignal jeweils mit um 90° verschobenen Mischersignalen beispielsweise ins Basisband heruntermischt. Nach einer Tiefpassfüterung und einer optional Abtastratenumsetzung durch die Filter 219 und 221 findet die Demodulation statt, wobei der Demodulator 223 beispielsweise eine Amplituden-Demodulation, eine Frequenz-Demodulation, eine Phasen-Demodulation oder eine Quadratur-Amplituden-Demodulation durchführen kann.

Der Analog-Digital-Umsetzer (ADU) 208 und der Mikrocontroller 211 sind dabei die durch die Taktsignale der Takterzeugungsvorrichtung gespeisten Signalverarbeitungseinrichtungen, wobei der Demodulator durch ein weiteres Taktsignal getaktet werden kann, das unter Verwendung eines dritten Frequenzumsetzers, das aus dem Ausgangstaktsignal des zweiten Frequenzumsetzers 209 durch eine Frequenzteilung durch einen weiteren Faktor gewonnen werden kann. Alternativ kann für den Demodulator das gleiche Taktsignal wie für den Mikrocontroller 211 verwendet werden.

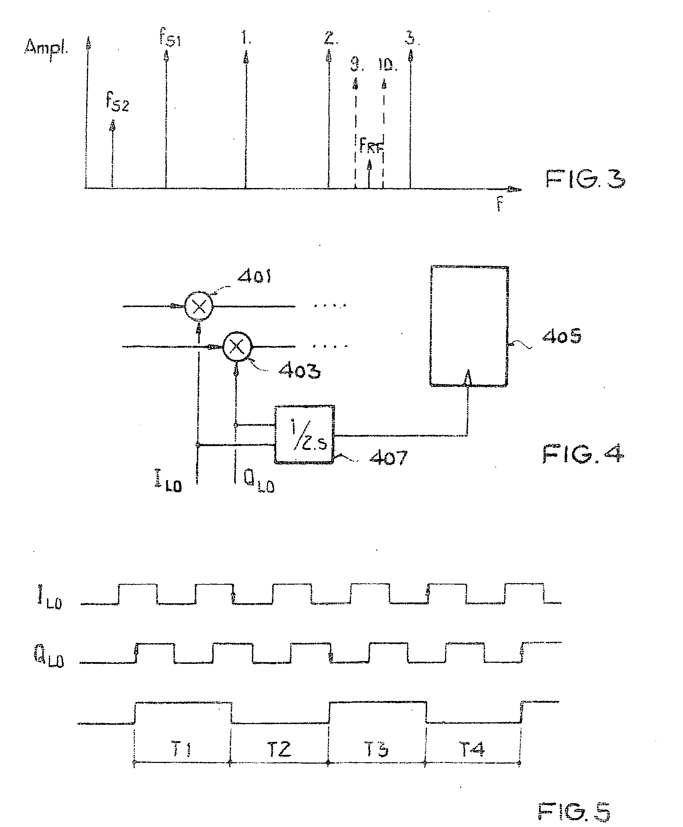

Fig. 3 zeigt einen Frequenzplan, der die Lage der in Fig. 2 dargestellten Frequenzen demonstriert. Mit fS1 ist die erste Taktfrequenz und im Ausführungsbeispiel der Fig. 3 zugleich die Abtastfrequenz fADU des Analog-Digital-Umsetzers (ADU) 208 bezeichnet. Weiterhin sind die Frequenzen der ersten Oberwelle (1.), der zweiten Oberwelle (2.) und der dritten Oberwelle der ersten Taktsignals schematisch dargestellt. Weiterhin sind in Fig. 3 die genutzt Frequenz fRF des Empfangssignals dargestellt. Dabei ist die Amplitude des Empfangssignals deutlich kleiner als die störenden Amplituden des ersten Taktsignals dargestellt. Es zeigt sich, dass die Empfangsfrequenz in einem Bereich in der Mitte zwischen zwei Oberwellen - im Ausführungsbeispiel der Fig. 3 zwischen der zweiten und dritten Oberwelle - des ersten Taktsignals ausgebildet ist. Weiterhin ist das zweite Taktsignal mit der Taktfrequenz fS2 dargestellt. Die neunte und zehnte Oberwelle des zweiten Taktsignals liegen wiederum links und rechts vom von der Empfangsfrequenz fRF des Empfangssignals. Die Signalanteile der Oberwellen des ersten Taktsignals und des zweiten Taktsignals können somit durch einen Filter leicht ausgefiltert werden. Nicht dargestellt ist das Basissignal des Oszillators mit der Basisfrequenz, die nur durch die Zwischenfrequenz fZF von der Empfangsfrequenz fRF abweicht. Die Abweichung zwischen der Empfangsfrequenz fRF und der Basisfrequenz ist somit für kleine Zwischenfrequenzen fZF nur gering.

Fig. 4 zeigt ein Blockdiagramm einer Empfangsvorrichtung mit einem ersten Mischer 401. einem zweiten Mischer 403 und einer Signalverarbeitungseinrichtung 405. Die Empfangsvorrichtung umfasst ferner eine Taktbereitstellungseinrichtung 407, deren Ausgang mit einem Takteingang der Signalverarbeitungseinrichtung verbunden ist.

Die Mischer 401 und 403 werden durch die Quadratursignale ILO und QLO angesteuert. Der Frequenzumsetzer 407 ist beispielsweise vorgesehen, ein Taktsignal mit 50% Duty Cycle aus den vorstehenden genannten Quadratursignalen durch eine Frequenzteilung um beispielsweise den Faktor 2.5 zu erzeugen.

Der Frequenzumsetzer kann beispielsweise ausgebildet sein, abwechselnd die Flanken der Quadratursignale zu zählen und eine steigende oder eine fallende Flanke bei jeder 5-ten Flanke der Quadratursignale erzeugt. Dabei repräsentiert der Faktor 2 die vorstehend genannte natürliche Zahl x. Dieser Fall ist in Fig. 5 für eine Takterzeugungsvorrichtung dargestellt.

Im oberen Diagramm aus Fig. 5 ist beispielhaft das In-Phase Signal ILO dargestellt. Im mittleren Zeitdiagramm ist der Zeitverlauf des Quadratursignals QLO dargestellt, das gegenüber dem In-Phase-Signal ILO um 90° in Phase verschoben ist. Im unteren Zeitdiagramm ist das resultierende Zeitdiagramm des Taktsignals dargestellt, das der Frequenzumsetzer 407 aus den Signalen ILO und QLO erzeugt.

Beginnend mit beispielsweise der steigenden Flanke des Quadratursignals QLO wird eine steigende Flanke des Ausgangssignals des Frequenzumsetzers 407 erzeugt. Gleichzeitig werden die Flanken der Quadiatursignale abwechselnd gezählt.

In diesem Ausführungsbeispiel wird das Ausgangstaktsignal auf einem Hochpegel gehalten (High), bis insgesamt die 2(x+0,5)-te Flanke in diesem Beispiel also die fünfte Flanke, gezählt wurde. Mit der fünften Flanke, die in diesem Ausführungsbeispiel einer fallenden Flanke des In-Phase-Signals entspricht, wird eine fallende Flanke des Ausgangstaktsignals erzeugt, das daraufhin in den Niedrigpegel-Zustand (Low) übergeht, wobei die Flankenzählung von vorne beginnt. Mit der fünften Flanke, die in diesem Ausführungsbeispiel einer fallenden Flanke des Quadratursignals entspricht, wird eine steigende Flanke des Ausgangstaktsignals erzeugt, wobei dieses erneut in den Hochpegel-Zustand übergeht. Auf diese Weise wird ein Ausgangstaktsignal mit 50% Duty Cycle erzeugt, das aus einer Teilung der Frequenz der Quadratursignale durch den Faktor 2,5 hervorgeht. Die Zeitdauern der Hochpegel-Zustände und der Niedrigpegel-Zustände T1 bis T4 sind daher gleich.

Ein Frequenzumsetzer aus Fig. 5 kann beispielsweise auf der Basis von Quadratursignalen ein in der Frequenz reduziertes Ausgangstaktsignal mit 50% Duty Cycle erzeugen. Ein derartiger Frequenzumsetzer umfasst beispielsweise eine Schaltereinrichtung, deren Ausgang mit einer ersten State-Machine verbunden ist, deren Ausgang wiederum mit einem Takteingang einer weiteren State-Machine verbunden ist. Ein Ausgang der zweiten State-Machine ist mit einem Eingang der Schaltereinrichtung verbunden. Dieser Frequenzumsetzer wird beispielsweise im Englischen als "Phase-Switching-Devider" bezeichnet. Frequenzteiler sind dabei an sich bekannt, beispielsweise aus IEEE Journal of Solid State Circuits, Vo. 35, No. 7, July 200 "A 5.3 GHz Programmable Divider for HiPerLAN in 0,25 µm CMOS".

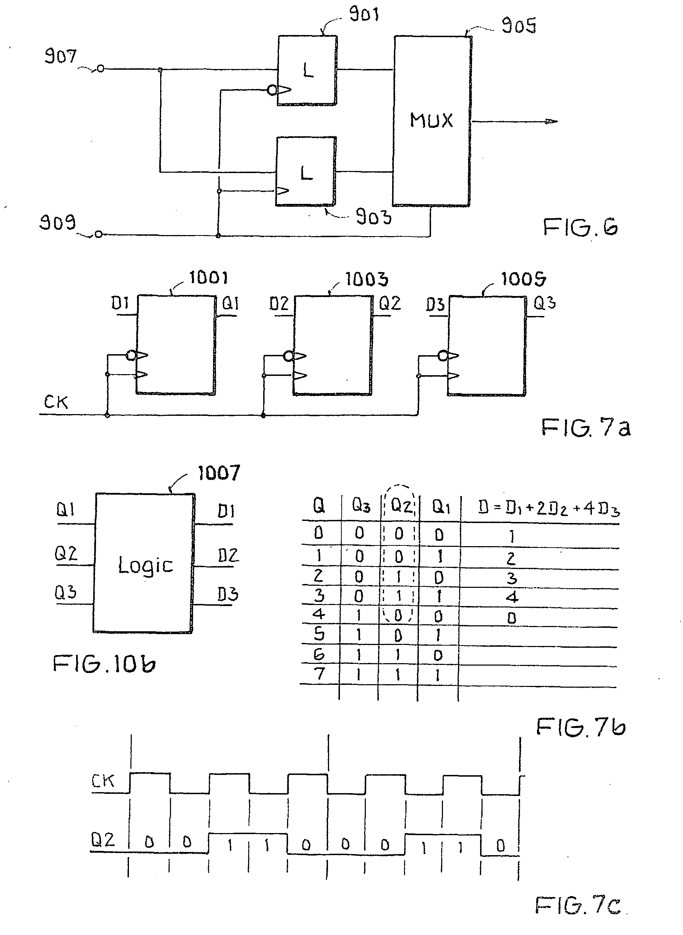

Fig. 6 zeigt ein sogenanntes "double-edge-triggered" Flipflop mit einem ersten Latch 901 und einem zweiten Latch 903, deren Ausgänge mit Eingängen eines Multiplexers 905 verbunden sind. Der Multiplexer 905 umfasst einen Ausgang, der mit Takteingängen der Latches 901 und 903 gekoppelt ist, wobei das an dem Takteingang des ersten Latchs 901 anliegende Signal negiert wird.

Fig. 7a zeigt eine Anordnung von drei double-edge-triggered Flipflops 1001, 1003, 1005 zur Frequenzteilung durch den Faktor 2,5, die eine Takterzeugungsvorrichtung bildet. Jeder der Flipflops 1001, 1003, 1005 wird mit einer steigenden und einer fallenden Flanke getriggert. Hierzu sind jeweils zwei Takteingänge vorgesehen, an die dasselbe Taktsignal anlegbar ist, wobei jeweils einer der Eingänge das Taktsignal invertiert. Ein erster Flipflop 1001 empfängt an seinem Dateneingang das Signal D1 und gibt an seinen Ausgang das Signal Q1 aus. Ein weiterer Flipflop 1003 empfängt an seinem Dateneingang das Signal D2 und gibt an seinem Ausgang das Signal Q2 aus. Ein weiterer Flipflop 1005 empfängt an seinem Eingang das Signal D3 und gibt an seinem Ausgang das Signal Q3 aus.

Die Signale D1, D2 und D3 werden mittels einer in Fig. 7b dargestellten Logik-Schaltung 1007 aus den Signalen Q1, Q2 und Q3 erzeugt. In Fig. 7c ist beispielsweise eine mögliche Zustandstabelle dargestellt, auf deren Basis die Funktionalität der Logik-Schaltung 1007 realisiert werden kann.

Fig. 7d zeigt beispielsweise ein Zeitdiagramm eines Basissignals ck und das dazugehörige Ausgangssignal Q2 des zweiten Flipflops 1003 als Taktsignal, dessen Periode das 2,5fache der Periode des Basissignals beträge. Der Teilerfaktor F ist in diesem Ausführungsbeispiel F = 2 + 1/2 = 2,5.

Die Erfindung ist nicht auf die dargestellten Ausgestaltungsvarianten der Figuren 1 bis 7d beschränkt. Beispielsweise ist es möglich einen anderen Teilungsfaktor F zu verwenden. Ebenfalls kann die Takterzeugungsvorrichtung auch kombiniert eine Multiplikation und eine Division durchführen.

### Bezugszeichenliste

- 101: Taktbereitstellungseinrichtung
- 103, 105, 107, 203, 209: Frequenzumsetzer
- 109,201: PLL
- 111: Quarz
- 113, 115, 117: Signalverarbeitungseinrichtung
- 119: Antenne
- 121, 207: Empfangsverstärker
- 123,205,215,217: Mischer
- 208, ADU: Analog-Digital-Umsetzer
- 211, µC: Mikrocontroller
- 213,219,221: Filter
- 223: Demodulator
- fLO: Frequenz des lokalen Oszillators
- fZF: Zwischenfrequenz
- fS1: erstes Taktsignal mit erster Taktfrequenz
- fS2: zweites Taktsignal mit zweiter Taktfrequenz
- fRF: Empfangssignal mit Empfangsfrequenz
- F, G, H: Faktor, Teilungsfaktor
- 1., 2., 3.: Oberwelle des ersten Taktsignals
- 9., 10.: Oberwelle des zweiten Taktsignals
- f: Frequenz
- Ampl.: Amplitude
- 901, 903: Latch
- 905: Multiplexer
- 907: Eingang
- 909: optionaler Anschluss
- 1001, 1003, 1005: Flip-Flop (double-edge-triggered)
- 1007: Logik-Schaltung

## Patentansprüche

1. Empfänger,
- mit einem Mischer (123, 205) im Empfangspfad,
- mit einem Oszillator (111, 109, 225, 201), dessen Ausgang mit einem Mischereingang des Mischers (123, 205) verbunden ist, wobei der Oszillator (111, 109, 225, 201) ausgebildet ist, ein mit einer Basisfrequenz oszillierendes Basissignal am Ausgang auszugeben,
- mit einer Takterzeugungsvorrichtung (101, 203, 209, 407) zur Erzeugung eines Taktsignals aus dem Basissignal, deren Eingang mit dem Ausgang des Oszillators (111, 109, 225, 201) verbunden ist, wobei die Takterzeugungsvorrichtung (101, 203, 209, 407) einen Frequenzumsetzer (103, 105, 107, 203, 209, 407) zum Umsetzen einer Basisfrequenz des Basissignals um den Faktor F = x + A, wobei x eine positive ganze Zahl und A eine rationale Zahl zwischen 0 und 1 ist, und
- mit einer Signalverarbeitungseinrichtung (113, 115, 117, 208), die dem Mischer (123, 205) im Empfangspfad nachgeschaltet ist, wobei die Signalverarbeitungseinrichtung (113, 115, 117, 208) mit der Takterzeugungsvorrichtung (101, 203, 209, 407) zur Ansteuerung mit dem Taktsignal verbunden ist.

2. Empfänger nach Anspruch 1, mit A = 1/2.

3. Empfänger nach einem der vorhergehenden Ansprüche, bei dem der Frequenzumsetzer einen Frequenzteiler aufweist, der ausgebildet ist, die Basisfrequenz durch den Faktor F zu teilen.

4. Empfänger nach einem der vorhergehenden Ansprüche, bei dem die Takterzeugungsvorrichtung einen weiteren Frequenzumsetzer zum Umsetzen einer Taktfrequenz des Taktsignals um den Faktor G = 2y + 1 in ein weiteres Taktsignal mit einer weiteren Taktfrequenz, wobei y eine positive ganze Zahl ist.

5. Empfänger nach Anspruch 4, bei dem der weitere Frequenzumsetzer einen weiteren Frequenzteiler aufweist, der ausgebildet ist, die Taktfrequenz durch den Faktor G zu teilen.

6. Empfänger nach einem der vorhergehenden Ansprüche,
- bei dem der Oszillator zur Ausgabe eines In-Phase-Signals und eines Quadraturphase-Signals als Basissignal mit der Basisfrequenz ausgebildet ist,
- bei dem die Takterzeugungsvorrichtung ausgebildet ist, abwechselnd die Flanken des In-Phase-Signals und des Quadraturphase-Signals zu zählen, um einen Zählerstand bei jeder gezählten Flanke zu erhöhen oder zu verringern,
- bei dem die Takterzeugungsvorrichtung ausgebildet ist, beim Zählerstand von M = 2m + 1 eine steigende oder fallende Flanke zu erzeugen, wobei m eine vorbestimmte positive ganze Zahl ist.

7. Empfänger nach Anspruch 6, bei dem die Takterzeugungsvorrichtung zur Zählung der Flanken einen Flankenzähler und/oder zur Erzeugung einer Flanke einen Signalgenerator aufweist.

8. Verfahren zum Empfang eines Empfangssignals,
- bei dem das Empfangssignal mittels eines Basissignal eines Oszillators mit einer Basisfrequenz auf ein Zwischensignal mit einer Zwischenfrequenz heruntergemischt wird,
- bei dem aus dem Basissignal ein Taktsignals durch Umsetzen um den F = x + A, wobei x eine positive ganze Zahl und A eine rationale Zahl zwischen 0 und 1 ist, und
- bei dem das Zwischensignal mit der Zwischenfrequenz in Abhängigkeit von dem Taktsignal ausgewertet wird.

9. Verfahren nach Anspruch 8, bei dem zur Auswertung das Zwischensignal mit der Zwischenfrequenz in Abhängigkeit von dem Taktsignal abgetastet und/oder demoduliert wird.

10. Verwendung eines In-Phase-Signals und eines Quadraturphase-Signals eines Oszillators eines Empfängers zur Erzeugung eines Taktsignals für eine nachgeschaltete Signalverarbeitungseinrichtung, bei der abwechselnd die Flanken des In-Phase-Signals und des Quadratur-phase-Signals gezählt werden, wobei ein Zählerstand bei jeder gezählten Flanke erhöht oder verringert wird, wobei beim Zählerstand M von M = 2m + 1 eine steigende oder eine fallende Flanke des Taktsignals erzeugt wird, und wobei m eine vorbestimmte positive ganze Zahl ist.
